# EUROPÄISCHE PATENTANMELDUNG

(11) **EP 2 515 403 A1**
(43) Veröffentlichungstag der Anmeldung: **24.10.2012**
(21) Anmeldenummer: 11163031.5
(22) Anmeldetag: 19.04.2011
(51) Int. Cl.: H02H 1/06

(54) **Schaltungsanordnung für ein Wechselstromschütz, Motorschutzrelais und Verfahren zur Herstellung einer Spannungsversorgung**

(71) Anmelder: Eaton Industries GmbH, 53115 Bonn (DE)
(72) Erfinder: Meid, Wolfgang, 56218, Mülheim-Kärlich (DE)
(74) Vertreter: Leadbetter, Benedict

(57) **Zusammenfassung**

Schaltungsanordnung für ein Wechselstromschütz mit einer Erregerspule, wobei die Erregerspule mindestens eine erste Wicklung zur Erzeugung einer Anzugs- und/oder Abwurferregung aufweist, Motorschutzrelais mit einer solchen Schaltungsanordnung, sowie Verfahren zur Herstellung einer Spannungsversorgung eines elektrischen Verbrauchers, wobei eine Erregerspule eines Wechselstromschützes mit mindestens einer ersten Wicklung zur Erzeugung einer Anzugs- und/oder Abwurferregung verwendet wird.

## Beschreibung

Die Erfindung betrifft eine Schaltungsanordnung für ein Wechselstromschütz mit einer Erregerspule, wobei die Erregerspule mindestens eine erste Wicklung zur Erzeugung einer Anzugs- und/oder Abwurferregung aufweist, ein Motorschutzrelais mit einer solchen Schaltungsanordnung, sowie ein Verfahren zur Herstellung einer Spannungsversorgung eines elektrischen Verbrauchers, wobei eine Erregerspule eines Wechselstromschützes mit mindestens einer ersten Wicklung zur Erzeugung einer Anzugs- und/oder Abwurferregung verwendet wird.

Motorschutzrelais, auch Überlastrelais genannt, stellen eine mögliche Anwendung einer Schaltungsanordnung als stromabhängige Schutzeinrichtung dar, welche eine Temperatur der Motorwicklung mittelbar über den in den Zuleitungen fließenden Strom überwachen. Ein Motorschutzrelais bietet einen bewährten und preiswerten Schutz eines Elektromotors vor Zerstörung durch Nichtanlauf, Überlastung oder Phasenausfall.

Ein elektronisches Motorschutzsystem ist beispielsweise in der EP 1 050 943 A2 beschrieben. Ein Nachteil derartiger Systeme besteht darin, dass die Elektronik durch ein eigenes Netzteil, in der Regel durch einen Transformator, mit einer Betriebsspannung versorgt werden muss, was einen erheblichen Raumbedarf mit sich bringt und die Kosten für die ansonsten einfache Sicherheitseinrichtung erheblich erhöht. Im Anlagenbau wäre eine kompakte Gestaltung der Schutzeinrichtung, insbesondere als steckbares Modul wünschenswert, was mit einem separaten Transformator jedoch nur unter erheblichem konstruktivem Aufwand möglich ist.

Eine Aufgabe der Erfindung besteht darin, eine Schaltungsanordnung für ein Wechselstromschütz mit einer Erregerspule derart auszubilden, dass eine kompakte Bauform der Schaltungsanordnung bei gleichzeitiger Kostenersparnis erreicht wird. Die Aufgabe wird durch die Gegenstände der unabhängigen Ansprüche gelöst. In den Unteransprüchen sind bevorzugte Ausführungsformen und vorteilhafte Weiterbildungen angegeben.

Die erfindungsgemäße Schaltungsanordnung für ein Wechselstromschütz weist eine Erregerspule auf, wobei die Erregerspule mindestens eine erste Wicklung zur Erzeugung einer Anzugs- und/oder Abwurferregung aufweist. Unter einem Wechselstromschütz im Sinne der Erfindung ist ein Relais zur Schaltung größerer Leistungen, beispielsweise in der Starkstromtechnik, zu verstehen, wobei der Steuerstromkreis mit Wechselspannung betrieben wird. Die Stromstärke und elektrische Spannung im Laststromkreis können um ein Vielfaches größer als in der Erregerspule sein. Schütze weisen in der Regel einen Zuganker auf, für dessen Ansteuerung eine etwas höhere Leistung erforderlich ist, als für einen Klappanker bei einem Relais. Schütze können mehrere gleichartige Schaltkontakte aufweisen, die zum Beispiel zum Schalten von Drehstromverbrauchern benötigt werden.

Erfindungsgemäß ist vorgesehen, dass die Erregerspule mindestens eine zweite Wicklung aufweist, wobei die zweite Wicklung als Spannungsversorgung für einen elektrischen Verbraucher ausgeführt ist. Ein Vorteil besteht darin, dass die Spannungsversorgung genau während der Zeit zur Verfügung steht, während der der Steuerstrom die erste Wicklung der Erregerspule durchfließt. Die erste Wicklung ist dazu insbesondere über einen Schalter mit einer Wechselstromquelle verbindbar. Die zweite Wicklung auf der Erregerspule bildet mit der ersten Wicklung auf dem gemeinsamen Spulenkern einen Transformator, so dass der Verbraucher mit einem entsprechend induzierten Wechselstrom versorgt wird. Dazu ist die erste Wicklung galvanisch von der zweiten Wicklung getrennt. Dem Fachmann sind dabei die Einflüsse von Windungszahl und Leiterquerschnitt der ersten und zweiten Wicklung auf die Parameter des induzierten Stroms bekannt. Die zweite Wicklung ist insbesondere parallel zu der ersten Wicklung angeordnet, wobei darunter eine Anordnung nebeneinander oder übereinander zu verstehen ist.

Der elektrische Verbraucher kann vorteilhaft jeder beliebige Verbraucher sein, der gerade während des aktivierten Zustands des Steuerkreises arbeiten soll. Der Verbraucher ist also bevorzugt eine elektronische Schaltung, welche eine Spannungsversorgung benötigt, während die erste Wicklung mit einer Wechselstromquelle verbunden ist. Gemäß einer bevorzugten Ausführungsform weist der elektrische Verbraucher eine elektronische Schaltung aufweist, wobei die elektronische Schaltung dazu vorgesehen ist, eine Verbindung der ersten Wicklung mit einer Wechselstromquelle zu unterbrechen. Dies erfolgt insbesondere unter zuvor definierten Umständen, die von den Eigenschaften der Elektronik abhängig sind. Denkbar ist eine Unterbrechung nach Ablauf einer bestimmten Zeit oder bei Überschreiten festgelegter Grenzwerte eines gemessenen Parameters. Durch die Unterbrechung der Verbindung der ersten Wicklung mit der Wechselstromquelle, beispielsweise durch Aktivieren eines Öffners in dem Steuerstromkreis, wird der Erregerstromkreis, oder Steuerstromkreis, getrennt und das Wechselstromschütz schaltet den Laststromkreis ab. Gleichzeitig wird die Spannungsversorgung des elektrischen Verbrauchers getrennt. Insbesondere ist der elektrische Verbraucher eine Messelektronik eines Motorschutzrelais. Mit dem üblichen Begriff Motorschutzrelais wird im Sinne der Erfindung ein entsprechendes System zum Überlastschutz eines Elektromotors verstanden, nicht das einzelne Relais oder Schütz. Sobald Parameter durch die Messelektronik erfasst werden, welche auf eine Überlast des Motors schließen lassen, kann die Messelektronik vorteilhaft unmittelbar das Wechselstromschütz abschalten, so dass der Motor getrennt wird. Die Messelektronik wird gleichzeitig abgeschaltet, da keine Spannungsversorgung mehr über die zweite Windung erfolgt, bis zu einem nachfolgenden Einschaltvorgang des Motors durch externe Betätigung.

Ein weiterer Gegenstand, der die Aufgabe löst, ist daher ein Motorschutzrelais mit einer erfindungsgemäßen Schaltungsanordnung, wie zuvor beschrieben, wobei das Wechselstromschütz zum Schalten eines Motors vorgesehen ist und wobei der elektrische Verbraucher eine Elektronik zur Überwachung des Motors ist.

Ein weiterer Gegenstand, der die Aufgabe löst, ist ein Verfahren zur Herstellung einer Spannungsversorgung eines elektrischen Verbrauchers, wobei eine Erregerspule eines Wechselstromschützes mit mindestens einer ersten Wicklung zur Erzeugung einer Anzugs- und/oder Abwurferregung verwendet wird, wobei mindestens eine zweite Wicklung auf der Erregerspule zur Spannungsversorgung des elektrischen Verbrauchers verwendet wird. Die erste Wicklung wird insbesondere über einen Schalter mit einer Wechselstromquelle verbunden. Bevorzugt wird eine Verbindung der ersten Wicklung mit der Wechselstromquelle durch den elektrischen Verbraucher getrennt, besonders bevorzugt mittels eines Öffners im Steuerstromkreis und weiterhin bevorzugt bei Erreichen festgelegter Parameter.

Nachfolgend wird die Erfindung anhand eines Ausführungsbeispiels erläutert. Die Darstellung ist lediglich beispielhaft und schränkt den allgemeinen Erfindungsgedanken nicht ein. Die Ausführungen gelten sowohl für die erfindungsgemäße Schaltungsanordnung, als auch für das erfindungsgemäße Verfahren.

Es zeigen
Figur 1 ein schematisches Schaltbild einer erfindungsgemäßen Schaltungsanordnung,
Figur 2 die Schaltungsanordnung nach Figur 1 in einer vorteilhaften Weiterbildung.

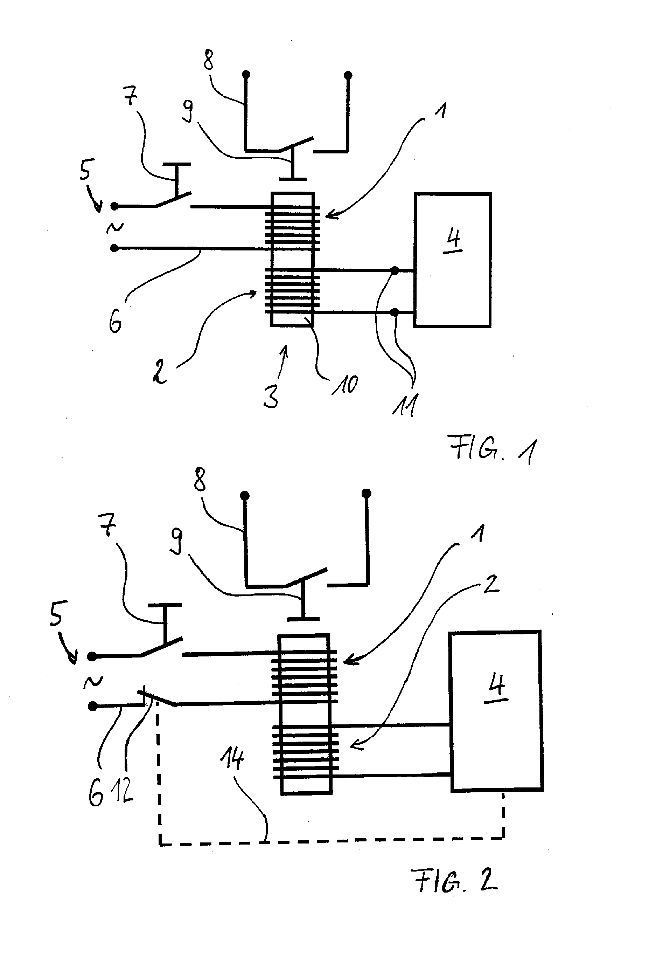

Die Figur 1 zeigt eine erfindungsgemäße Schaltungsanordnung für ein Wechselstromschütz mit einer Erregerspule 3, wobei die Erregerspule 3 mindestens eine erste Wicklung 1 zur Erzeugung einer Anzugs- und/oder Abwurferregung aufweist. Ein Steuerstromkreis 6 wird mit einer Wechselspannung 5 betrieben. Ein Laststromkreis 8 ist lediglich angedeutet dargestellt. Bei Einschalten der Wechselspannung im Steuerstromkreis 6 durch den Schalter 7 erzeugt die erste Wicklung 1 mit dem Kern 10 ein Magnetfeld, welches einen Zuganker 9 anzieht, der wiederum den Laststromkreis 8 schließt. Erfindungsgemäß ist vorgesehen, dass die Erregerspule 3 mindestens eine zweite Wicklung 2 aufweist, wobei die zweite Wicklung 2 als Spannungsversorgung für einen elektrischen Verbraucher 4 ausgeführt ist. Die Spannungsversorgung steht genau während der Zeit an den Anschlüssen 11 der zweiten Wicklung 2 zur Verfügung, während der der Steuerstrom die erste Wicklung 1 der Erregerspule 3 durchfließt. Die zweite Wicklung 2 auf der Erregerspule 3 bildet mit der ersten Wicklung 1 auf dem gemeinsamen Spulenkern 10 einen Transformator, so dass der Verbraucher 4 mit einem entsprechend induzierten Wechselstrom versorgt wird. Die erste Wicklung 1 ist erkennbar galvanisch von der zweiten Wicklung 2 getrennt.

Die Schaltungsanordnung gemäß Figur 2 unterscheidet sich von der im Zusammenhang mit der Figur 1 beschriebenen Schaltungsanordnung lediglich darin, dass der elektrische Verbraucher 4 dazu vorgesehen ist, einen Öffner 12 über eine Verbindung 14 zu betätigen. Dadurch wird die Verbindung der ersten Wicklung 1 mit der Wechselstromquelle 5 getrennt, der Steuerstromkreis 6 also unterbrochen. In der Folge öffnet der Zuganker 9, beispielsweise federbeaufschlagt, den Laststromkreis 8. Gleichzeitig wird auf die zweite Windung 2 kein Stromfluss induziert, so dass die Spannungsversorgung des elektrischen Verbrauchers 4 ebenfalls unterbrochen ist.

### Bezugszeichenliste

- 1: Erste Wicklung
- 2: Zweite Wicklung
- 3: Erregerspule
- 4: Verbraucher
- 5: Wechselstromquelle
- 6: Steuerstromkreis
- 7: Schalter
- 8: Laststromkreis
- 9: Zuganker
- 10: Spulenkern
- 11: Anschlüsse
- 12: Öffner
- 14: Verbindung

## Patentansprüche

1. Schaltungsanordnung für ein Wechselstromschütz mit einer Erregerspule (3),
wobei die Erregerspule (3) mindestens eine erste Wicklung (1) zur Erzeugung einer Anzugs- und/oder Abwurferregung aufweist, **dadurch gekennzeichnet,**
**dass** die Erregerspule (3) mindestens eine zweite Wicklung (2) aufweist, wobei die zweite Wicklung (2) als Spannungsversorgung für einen elektrischen Verbraucher (4) ausgeführt ist

2. Schaltungsanordnung nach Anspruch 1, **dadurch gekennzeichnet, dass** die erste Wicklung (1) mit einer Wechselstromquelle (5) verbindbar ist.

3. Schaltungsanordnung nach einem der vorhergehenden Ansprüche, **dadurch gekennzeichnet, dass** die erste Wicklung (1) galvanisch von der zweiten Wicklung (2) getrennt ist.

4. Schaltungsanordnung nach einem der vorhergehenden Ansprüche, **dadurch gekennzeichnet, dass** der elektrische Verbraucher (4) eine elektronische Schaltung aufweist, wobei für die elektronische Schaltung eine Spannungsversorgung vorgesehen ist, solange die erste Wicklung (1) mit einer Wechselstromquelle (5) verbunden ist.

5. Schaltungsanordnung nach einem der vorhergehenden Ansprüche, **dadurch gekennzeichnet, dass** der elektrische Verbraucher (4) eine elektronische Schaltung aufweist, wobei die elektronische Schaltung dazu vorgesehen ist, eine Verbindung der ersten Wicklung (1) mit einer Wechselstromquelle (5) zu unterbrechen.

6. Schaltungsanordnung nach einem der vorhergehenden Ansprüche, **dadurch gekennzeichnet, dass** der elektrische Verbraucher (4) eine Messelektronik eines Motorschutzrelais ist.

7. Motorschutzrelais mit einer Schaltungsanordnung nach einem der vorhergehenden Ansprüche, wobei das Wechselstromschütz zum Schalten eines Motors vorgesehen ist und wobei der elektrische Verbraucher (4) eine Elektronik zur Überwachung des

8. Verfahren zur Herstellung einer Spannungsversorgung eines elektrischen Verbrauchers (4), wobei eine Erregerspule (3) eines Wechselstromschützes mit mindestens einer ersten Wicklung (1) zur Erzeugung einer Anzugs- und/oder Abwurferregung verwendet wird, **dadurch gekennzeichnet, dass** mindestens eine zweite Wicklung (2) auf der Erregerspule (3) zur Spannungsversorgung des elektrischen Verbrauchers (4) verwendet wird.

9. Verfahren nach Anspruch 8, **dadurch gekennzeichnet, dass** die erste Wicklung (1) mit einer Wechselstromquelle (5) verbunden wird.

10. Verfahren nach einem der Ansprüche 8 oder 9, **dadurch gekennzeichnet, dass** eine Verbindung der ersten Wicklung (1) mit einer Wechselstromquelle (5) durch den elektrischen Verbraucher (4) getrennt wird.
